# EUROPEAN PATENT APPLICATION

(11) **EP 1 897 713 A1**
(43) Date of publication of application: **12.03.2008**
(21) Application number: 06766489.6
(22) Date of filing: 08.06.2006
(51) Int. Cl.: B60J 1/02, B29C 45/14, B29C 45/26, B60J 1/00

(54) **METHOD FOR PRODUCING WINDOW GLASS WITH DECORATION MEMBER AND WINDOW GLASS WITH DECORATION MEMBER**

(30) Priority: 27.06.2005 JP 2005186769
(71) Applicant: CENTRAL GLASS COMPANY, LIMITED, Ube-shi, Yamaguchi 755-0001 (JP)
(72) Inventor: NAKATA, Osamu c/o CENTRAL GLASS COMPANY LIMITED, Mie 515-0001 (JP)
(74) Representative: Thul, Stephan
(86) International application number: PCT/JP2006/311516
(87) International publication number: WO 2007/000886

(57) **Abstract**

In a method for producing a window glass with a decoration member, comprising a resin frame integrally secured to a periphery of the window glass and the decoration member secured to the frame, the method in which the decoration member is set in a cavity space of a die used for injection molding of the frame, and an adhesive layer is formed on a surface of the decoration member, which touches the frame, is provided.

## Description

### TECHNICAL FIELD

The present invention relates to a window glass in which a frame is integrally molded with the glass, and particularly to a window glass used for vehicle, having a frame to which a member for the purpose of decoration etc. is secured.

### BACKGROUND OF THE INVENTION

In general, a glass plate used as a window in a vehicle such as train and car, is mounted in a metallic vehicle body by using a resin frame.

Further, a resinor metallic member for the purpose of decoration etc. is secured to the frame. To secure the member, an adhesive or a double-faced adhesive tape etc. is used.

In recent years, the resin frame is directly formed on the glass plate by extrusion molding or injection molding, which extrudes or injects the resin in a liquid state. Then a frame-molded glass with which the frame is integrated, is used as a component of assembly of the vehicle.

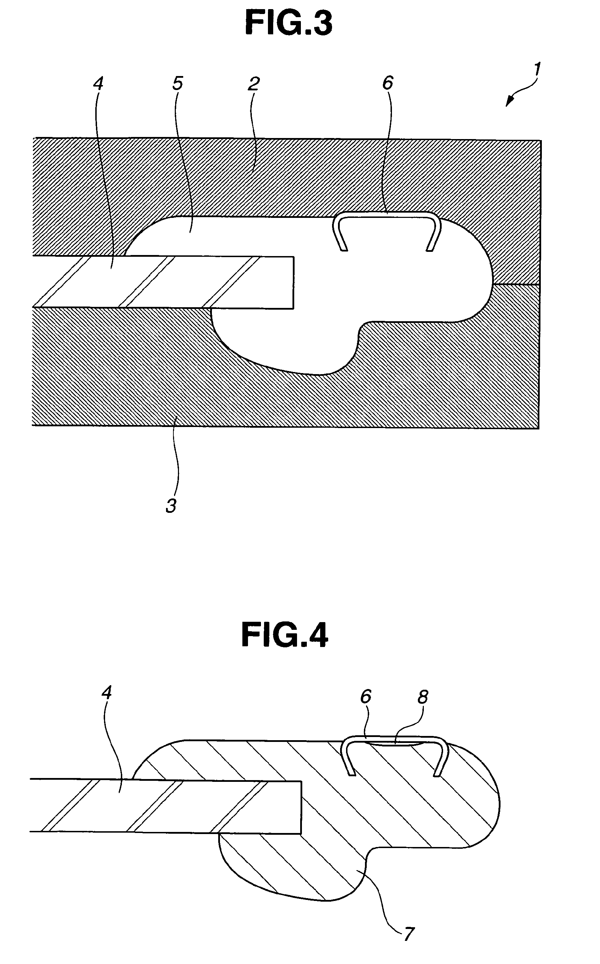

As shown in Fig. 3, a cavity space 5 of a die 1 is formed between an upper die 2 and a lower die 3 at a periphery of a window glass 4, the resin is then injected into the cavity space 5. After the resin injected into the cavity space 5 becomes solid, the window glass is taken from the die 1, and a frame-molded window glass with which the resin frame is integrated is made.

Upon molding the frame, there are occasions where a resin or metallic plate decoration member is integrally secured to a surface of the frame of such frame-molded window glass.

In a Patent Document 1, in a case where the frame is molded by the injection molding, a technology has disclosed, which sets the decoration member in the cavity space of the die used for the injection molding and integrates the glass plate, the frame and the decoration member at the same time when molding the frame.

By setting the decoration member in the cavity space and integrating the frame and the decoration member, the decoration member is integrally secured to the frame more tightly or strongly than a case where the decoration member is secured to the frame after the molding of the frame. Thus, there is no risk that the decoration member will came off etc., furthermore it has an advantage of cost reduction, such as reduction of assembly man-hour. Patent Document 1 : Japanese Patent Application Kokai Publication No. 6-072144

### SUMMARY OF THE INVENTION

The decoration member secured to a predetermined position in the die is integrated with the frame by the injection molding of the frame. However, due to heat contraction of the resin used in the frame, the decoration member is separated or exfoliated from the frame, and a gap appears between the decoration member and the frame.

This gap causes an occurrence of a creak or squeak, and is recognized as deficiency. The present invention is made to remove this deficiency.

According to the present invention, in a method for producing a window glass with a decoration member, comprising a resin frame integrally secured to a periphery of the window glass and the decoration member secured to the frame, the method in which the decoration member is set in a cavity space of a die used for injection molding of the frame, and an adhesive layer is formed on a surface of the decoration member, which touches the frame, is provided.

### BRIEF DESCRIPTION OF THE DRAWINGS

Fig. 1 is a schematic sectional view showing a state where a window glass and a decoration member to which an adhesive is applied are disposed in a die to form or produce a window glass with a frame (a frame-molded window glass) according to the present invention.
Fig.2 is a schematic sectional view of a frame portion of a decoration member-attached window glass, according to the present invention.
Fig. 3 is a schematic sectional view showing a state where a window glass and a decoration member are disposed in a die to form or produce a window glass with a frame (a frame-molded window glass).
Fig.4 is a schematic sectional view of a frame portion of a decoration member-attached window glass, according to a related art.

### DETAILED DESCRIPTION

A method for producing a window glass with a decoration member according to the present invention is capable of providing a window glass with a decoration member that has no creak or squeak caused by the gap between the decoration member and the frame by the injection molding.

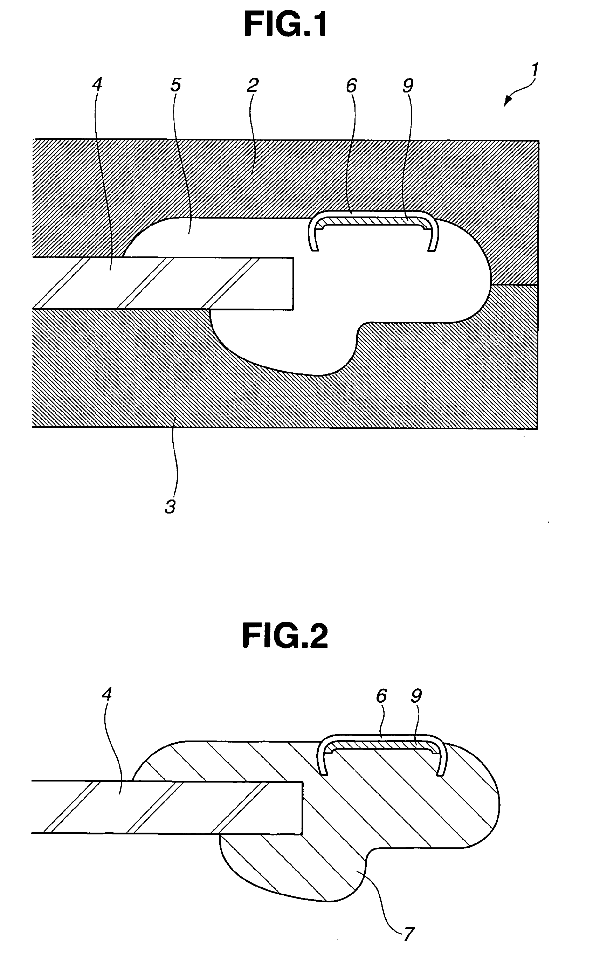

A resin frame is integrated with a periphery of the window glass by the injection molding. For example, as shown in Fig. 1, an edge portion of the window glass is set in a cavity space formed between an upper die and a lower die of a die. The resin used for the frame molding is then injected into the cavity space, and the window glass with which the frame is integrated is produced.

In the present invention, the decoration member is set in the cavity space of the die before or after the set of the window glass, and the resin is injected into the cavity space, then the window glass with the decoration member, in which the decoration member is integrated with the frame, is produced.

An adhesive is applied on a surface of the decoration member, which touches the resin forming the frame, and an adhesive layer is formed. With regard to an adhesive application area, it is desirable that the adhesive application area should be the whole area of the surface of the decoration member, which touches the frame. However, only a part of the surface might be applied with the adhesive. Further, in a case where the decoration member is secured to the die by using a pin etc., it is desirable that the adhesive should not be applied to an area where the pin touches.

With regard to the adhesive used for the adhesive layer, it is required that the adhesive should have adhesiveness which can bond the decoration member and the resin forming the frame. In addition, since the resin forming the frame is injected at high temperature, also heat resistance should be required of the adhesive.

With respect to the resin forming the frame, it could be formed by using one ormore resins such as polyvinyl chloride resin, urethane resin, fluorocarbon resin or fluororesin and silicon resin etc..

As for the decoration member, its material is not limited. However, it is desirable that the decoration member should be formed by polyvinyl chloride resin or polypropylene resin, or metal such as stainless steel etc..

On the other hand, regarding the adhesive used for forming the adhesive layer, it is desirable that the adhesive should be a liquid adhesive which can easily be applied in liquid form, for instance, which allows brush coating or spray coating or painting.

Further, since the resin is injected at high temperature, heat resistance should be required of the adhesive. It is preferable that a hot-setting adhesive, such as epoxy base adhesive or nylon base adhesive etc. , be used as the adhesive. It is particularly desirable that the nylon base adhesive having heat resistance over 100°C should be used.

The decoration member at which the adhesive layer is formed is set in the cavity space as shown in Fig. 1, and the resin forming the frame is injected into the cavity space. The window glass with the decoration member, in which the decoration member is integrated with the frame, is then produced as shown in Fig. 2.

The present invention is exemplified by the following embodiment. However, the present invention is not limited to the following embodiment.

### (embodiment)

A window glass 4 for a vehicle, formed to a predetermined shape by bending a 3 mm-thick plate glass, was set in a die 1 to form a frame by way of injection molding. Further, a decoration member 6 at which an adhesive layer 9 is formed was set at an upper die 2, and a resin forming the frame was injected into a cavity space 5 of the die, then a window glass with the frame was produced.

As the decoration member 6, stainless steel was used. Further, as the resin forming the frame, polyvinyl chloride resin was used. As an adhesive forming the adhesive layer, nylon base adhesive which hardens at 120°C was used.

With respect to the produced frame-molded window glass, with which the decoration member is integrated, the decoration member 6 was bonded with the frame 7 by the adhesive layer 9 as shown in Fig. 2, and there was no gap between the decoration member 6 and the frame 7.

(comparative example) As shown in Fig. 3, a window glass with the frame member, in which the decoration member is integrated with the frame, was produced in the same manner as the above embodiment, except that the adhesive layer is not formed at the decoration member 6.

With respect to the produced window glass with the frame, as shown in Fig. 4, due to the difference in heat contraction between the resin forming the frame and the decoration member, a gap 8 appeared between the decoration member 6 and the frame 7, and this caused the creak or squeak.

## Claims

1. A method for producing a window glass with a decoration member, comprising a resin frame integrally secured to a periphery of the window glass and the decoration member secured to the frame, the method comprising:
setting the decoration member in a cavity space of a die used for injection molding of the frame; and
forming an adhesive layer on a surface of the decoration member, the surface touching the frame.

2. A window glass with a decoration member, produced by the method of claim 1, wherein
the adhesive layer is formed by a liquid nylon base adhesive.
